# EUROPEAN PATENT SPECIFICATION

(11) **EP 3 405 833 B1**
(45) Date of publication and mention of the grant of the patent: **20.05.2020**
(21) Application number: 17711360.2
(22) Date of filing: 12.01.2017
(51) Int. Cl.: G02C 1/08, G02C 5/22, G02C 5/10

(54) **ELASTIC RIM LOCK WITHOUT SCREWS FOR EYEGLASSES OPERATING AS HINGE AND TEMPLE**
SCHRAUBENLOSER SCHLIESSBLOCK FÜR BRILLEN MIT SCHARNIER- UND BRILLENBÜGELFUNKTION
BLOC DE FERMETURE SANS VIS POUR LUNETTES AVEC FONCTION DE CHARNIERE ET BRANCHE

(30) Priority: 21.01.2016 IT UB20150648
(43) Date of publication of application: 28.11.2018
(73) Proprietor: Kacavenda, Dijana, 32044 Pieve di Cadore (BL) (IT)
(72) Inventor: Kacavenda, Dijana, 32044 Pieve di Cadore (BL) (IT)
(74) Representative: Garavelli, Paolo
(86) International application number: PCT/IT2017/000002
(87) International publication number: WO 2017/125959

(56) References cited:
- EP-A2- 0 838 710
- DE-B- 1 296 409
- FR-A- 1 470 276
- FR-A1- 2 271 594
- GB-A- 2 491 210

## Description

The present invention refers to an elastic rim lock without screws for eyeglasses operating as hinge and temple.

The present invention deals with flexible rim lock and hinge arrangements for eyeglasses which allow an efficient elastic articulation between temple and front frame, with low manufacturing and assembling costs for the eyeglasses.

Known rim locks for eyeglasses have some inconveniences, among which the need of using screws, the difficulty of perfectly matching the two parts of the rim, high costs both for manufacturers and for the public, a difficulty for the optician to assemble the lenses, chance by an unskilled person to disassemble the lenses to clean and sanitize the eyeglass, a difficulty when treating materials such as aluminium and titanium.

Eyeglasses are known which are made of materials which cannot be welded or for which welding is costly and unreliable.

The art has rim locks which are closed through screws, to which hinges are fastened through screws or rivets. A thread is made in the material and the rim lock is fastened through a screw, making the operation costly and unaesthetic.

The rim lock is made on the part of the face or the temple.

On a thread made of aluminium: the screws can be unscrewed with difficulty, and once unscrewed have not the same grip: consequently, an optician does not want to purchase this type of eyeglasses. When painting, the screws are painted and consequently the small channel is closed, thereby preventing the entry of a screwdriver. During the screwing and unscrewing steps, it often happens that the screwdriver slips from the seat of the screw, creating permanent damages to the paint; moreover, the screwdriver can scrap the lenses.

From searches, it does not appear that there is a rim lock which can be easily widened and cleaned by the end user to clean and sanitize the eyeglass, and which performs the function of temple or of core on which the temple is assembled.

FR-A-1 470 276 discloses a rim lock according to the preamble of Claim 1.

Object of the present invention is solving the above prior art problems, by providing an elastic rim lock without screws for eyeglasses operating as hinge and temple, which can be easily manufactured and immediately assembled; can ensure a positioning stability between the two parts of the rim; can be applied on different types of materials (among which aluminium, titanium, acetate plastics, injected plastics, wood and other metallic alloys); is elastic and without screws; can be opened wide to allow the user to assemble and disassemble the lenses autonomously; has the technical change of extracting the lens from the rim to remove dirt and thereby allow the end user to clean and sanitize the eyeglass.

The above and other objects and advantages of the invention, as will appear from the following description, are obtained with an elastic rim lock without screws as claimed in claim 1. Preferred embodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) could be made to what is described, without departing from the scope of the invention as appears from the enclosed claims.

The present invention will be better described by some preferred embodiments thereof, provided as a non-limiting example, with reference to the enclosed drawings, in which:

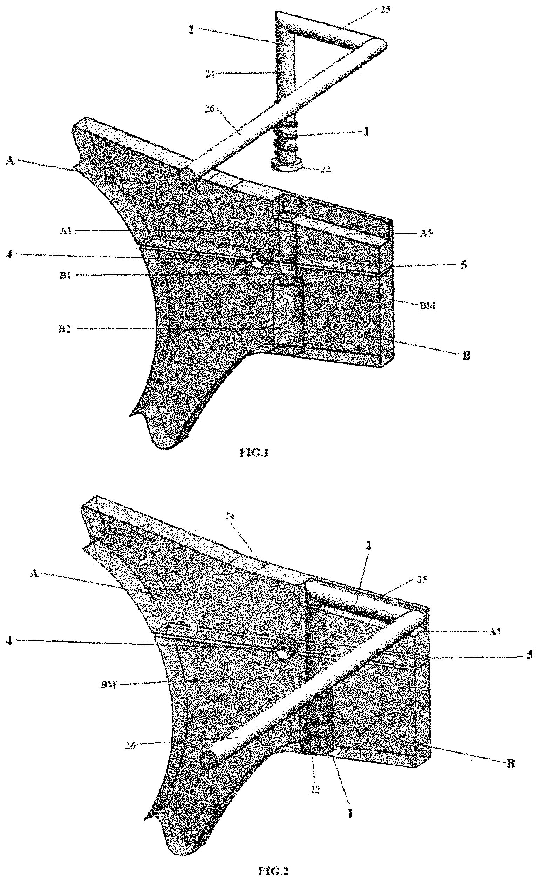

- Figure 1 is a perspective view on an enlarged scale of a first preferred embodiment of the rim lock of the present invention in a disassembled condition;
- Figure 2 is a perspective view on an enlarged scale of the rim lock of Figure 1 in the phase in which a lens is assembled according to the present invention;

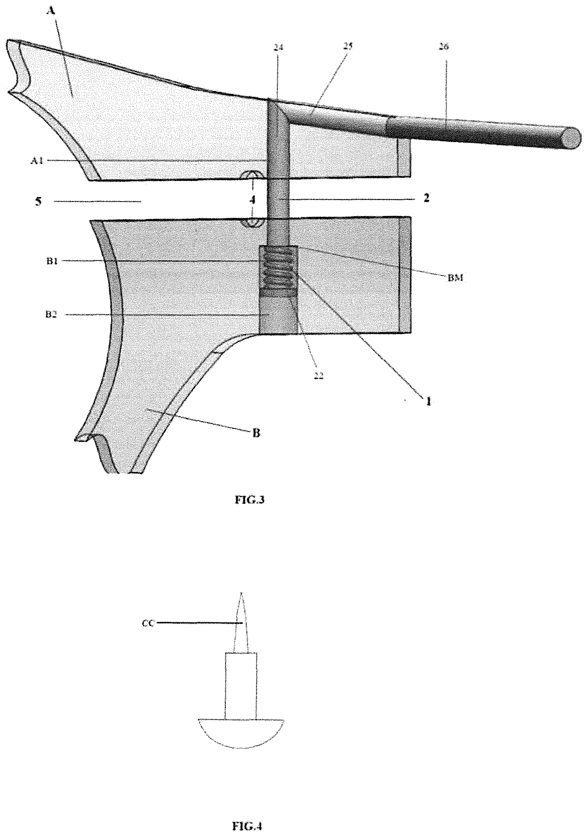

- Figure 3 is a perspective view on an enlarged scale of the rim lock of Figure 1 in its phase of maximum opening according to the present invention;
- Figure 4 is a front view on an enlarged scale of the conical body (CC) of the rim lock of Figure 1;
- Figure 5 is a perspective view in an enlarged scale of a second preferred embodiment of the elastic rim lock of the present invention; and
- Figure 6 is a side view of the elastic rim lock of Figure 5.

With reference to the Figures, the present invention allows making a rim lock for full circles for which, upon assembling the lens in the front frame, no screw has to be unscrewed and screwed.

The present invention, moreover, makes the two parts of the front frame perfectly coincide, once having closed the front frame.

Moreover, a rim lock is obtained, which widens itself when assembling the lens and is then automatically closed again, remaining safe and reliable.

The rim lock of the invention is invisible and completely hidden in the material of its front frame.

A rim lock is obtained with a flexible and permanent automatic seal, and which has enough force to keep the lens stable.

The rim lock of the invention can be widened enough to be able to disassemble the lens in a simple and understandable way also by unskilled people.

The rim lock of the invention allows the end user to wholly sanitize the eyeglass, above all in points which are usually impossible to reach (small channel, etc.).

This rim lock closes without an optician using the screws.

This rim lock also performs the function of hinge and temple.

The temple is pusher towards a part of the front frame, in order to obtain a permanent but flexible pressure, in order to guarantee a frictional sliding when opening and closing the temple.

The rim lock of the invention has a low cost but is at the same time reliable, stable and with the pieces composing the mechanical parts hidden in the front frame.

This rim lock is made of: aluminium, titanium, wood, horn, magnesium and all other materials which can be welded with difficulty or whose welding costs too much.

It will be possible to combine various materials together, because the material of the rim lock does not depend in any way on the material of the front frame.

Once having inserted the conical body into its suitable hole, the end user or unskilled person in this field is able to wash and sanitize the whole eyeglass.

The elastic rim lock without screws for eyeglasses operating as hinge and temple of the invention is composed of: a coil spring (1), a titanium wire (2), a first upper front frame part (A), a second lower front frame part (B), a hole (4) and a cut (5).

In the first front frame part (A) a seat (A1) is obtained.

In the second front frame part (B) a seat is obtained, composed of two holes/seats (B1, B2) with different diameters.

The first and second front frame parts (A, B) are divided by the cut (5).

The first seat (B2) ha a greater diameter with respect to the external diameter of the spring (1) and to the external diameter of the head (22).

On the top of the titanium wire (2) a head (22) is made. Part of the titanium wire (2) coincides with the second segment (25), which is always in flexible contact with the surface (A5) obtained in the first front frame part (A) of the front frame. The first segment (24) is housed in the seats (A1) (B1) (B2). The segment (26) functions as temple.

The seats (A1), (B1) have a diameter just greater than the external diameter of the titanium wire (2).

The spring (1) is tensioned between the head (22) of the titanium wire (2) and the end (BM) of the first seat (B2).

The seats (A1) and (B1) have also the function of always guaranteeing a perfect coincidence between the first and second front frame parts (A) and (B).

The first and second front frame parts (A) and (B) are always mutually in flexible contact, and if exposed to a bigger force with respect to the spring force, can be opened wide upon assembling the lens. In this step, the second front frame part (B) moves away from the first front frame part (A) and a longitudinal displacement of the first seat (B2) occurs with respect to the head (22) of the titanium wire (2) and the spring, further forced between the head (22) and the end (BM) of the first seat (B2). The same wide-opening effect occurs when a conical body (CC) is inserted into the hole (4).

The hole (4) is milled on the cut (5) and its function is housing the conical body (CC), to allow the elastic opening of the rim of the eyeglass.

The first front frame part (A) and the second front frame part (B) are in permanent flexible contact. The spring (1) is tensioned between the head (22) of the wire (2) and the surface (BM) of the first seat (B2). The diameter of the head (22) and the external diameter of the spring (1) are lower than the diameter of the first seat (B2) and longitudinally slide with respect to the axis of the first seat (B2) when the first front frame part (A) and the second front frame part (B) move one apart from the other. The first segment (24) of the wire (2) passes through the spring (1), the first seat (B2), the second seat (B1) and the seat (A1). The second segment (25) is in permanent contact with the surface (A5) of the part of first front frame part (A) and has the function of defining the length of the first segment (24). The cut (5) is made between the seat (A1) and the second seat (B1). The part (26) of the wire (2) functions as temple or temple core. The rim lock has a hole (4) which is on the cut (5). The size of the external diameter of the conical body (CC) is equal to the stroke of the spring (1).

As regards the assembly of the rim lock, the spring (1) is placed around the titanium wire (2) till it gets to the head (22) of the titanium wire (2). The titanium wire (2) passes through the seats (B2), (B1), (A1) till the head (22) wholly enters in the front frame.

The titanium wire (2) is bent in order to coincide with the surface (A5).

The titanium wire (2) is bent to create the segment (26) which works as temple.

The hole is made on the cut (5). In the hole (4) the conical body (CC) is inserted, to allow a easier opening of the rim.

When the conical body (CC) is inserted in the hole (4), the spring (1) is compressed and the first front frame part (A) moves away from the second front frame part (B), making it possible to open the rim also by unskilled people in the field.

Summarizing, the invention deals with an elastic rim lock without screws for eyeglasses operating as hinge and temple comprising: a coil spring (1), a first upper front frame part (A), a second lower front frame part (B) and a cut (5), which longitudinally separates the first front frame part (A) from the second front frame part ((B), the first front frame part (A) and the second front frame part (B) being in permanent flexible contact, the spring (1) being tensioned between a head (22) of the wire (2) and a surface (BM) of a first seat (B2) of the second front frame part (B), the diameter of the head (22) and the external diameter of the spring (1) being lower than the diameter of the first seat (B2) and longitudinally sliding with respect to an axis of the first seat (B2) when the first front frame part (A) and the second front frame part (B) move away one from the other.

The above elastic rim lock further comprises a wire (2), a first segment (24) of the wire (2) passing through the spring (1), the first seat (B2), a second seat (B1) of the second front frame part (B) operatively connected to the first seat (B2) and having a smaller diameter than the first seat (B2), and a seat (A1) of the first front frame part (A), while a second segment (25) of the wire (2) is in permanent contact with a surface (A5) of the first front frame part (A) parallel to an axis of the cut (5), and has the function of defining the length of the first segment (24), a section (26) of the wire (2) being configured to be a temple or a temple core, the cut (5) being made between the seat (A1) and the second seat (B1), the second seat (B1).

In particular, the elastic rim lock has a hole (4) which is on the cut (5), the hole (4) having the function of housing a conical body (CC) to allow the elastic opening of the rim of the eyeglass, the size of the external diameter of the conical body (CC) being equal to a stroke of the spring (1).

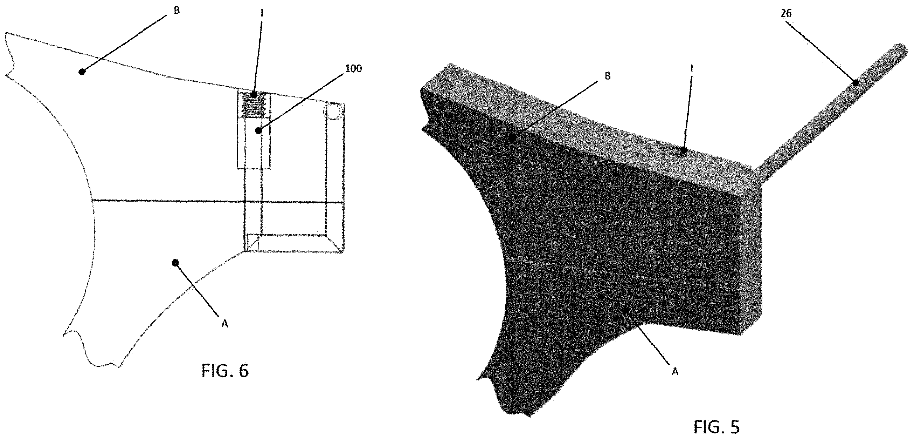

According to the variation shown in Figures 5 and 6, the rim lock of the invention further comprises a nut (100) placed in place of the head (22) of the wire (2), such nut (100) allowing to tension the spring (1) in order to be able to previously bend the wire (2) and then assemble it on the rim lock. This arrangement allows solving the manufacturing problem for which, by bending the wire (2) on the front frame of the eyeglass, it I s necessary to pay attention not to damage the painting, and this strongly slows down the manufacturing cycle.

In this way, instead the temple (26) or the wire (2) already frictioned can be used as core to be able to coat it with any other material, for example titanium, plastics, rubber, wood, etc.

## Claims

1. Elastic rim lock without screws for eyeglasses operating as hinge and temple comprising: a coil spring (1), a first upper front frame part (A), a second lower front frame part (B) and a cut (5), which longitudinally separates the first upper front frame part (A) from the second lower front frame part (B), the first upper front frame part (A) and the second lower front frame part (B) being in flexible contact, the spring (1) being tensioned between a head (22) of a wire (2) and a surface (BM) of a first seat (B2) of the second lower front frame part (B), the diameter of the head (22) and the external diameter of the spring (1) being lower than the diameter of the first seat (B2) and longitudinally sliding with respect to an axis of the first seat (B2) when the first upper front frame part (A) and the second lower front frame part (B) move away one from the other, **characterized in that** the elastic rim lock comprises the wire (2), a first segment (24) of the wire (2) passing through the spring (1), the first seat (B2), a second seat (B1) of the second lower front frame part (B) operatively connected to the first seat (B2) and having a smaller diameter than the first seat (B2), and a seat (A1) of the first upper front frame part (A), while a second segment (25) of the wire (2) is in contact with a surface (A5) of the first upper front frame part (A) parallel to an axis of the cut (5), and has the function of defining the length of the first segment (24), the first segment (24) also operating as hinge for the temple, a section (26) of the wire (2) being configured to be a temple or a temple core, the cut (5) being made between the seat (A1) and the second seat (B1).

2. Elastic rim lock according to claim 1, **characterized in that** it has a hole (4) which is in the plane of the cut (5) perpendicular to the plane of the front frame, the hole (4) having the function of housing a conical body (CC) to allow an elastic opening of the rim of the eyeglass, the size of the external diameter of the conical body (CC) being equal to a stroke of the spring (1).

3. Elastic rim lock according to claim 1 or 2, **characterized in that** the head (22) is a nut (100), said nut (100) allowing to tension the spring (1) in order to be able to previously bend the wire (2) and then assemble it on the rim lock.

## Patentansprüche

1. Elastischer Schließblock ohne Schrauben für Brillen, der als Scharnier und Stange dient und Folgendes enthält: eine flache Spiralfeder (1), einen ersten Teil eines oberen vorderen Rahmens (A), einen zweiten Teil eines unteren vorderen Rahmens (B) und eine Einkerbung (5), die den ersten Teil des oberen vorderen Rahmens (A) vom zweiten Teil des unteren vorderen Rahmens (B) in Längsrichtung trennt, der erste Teil des oberen vorderen Rahmens (A) und der zweite Teil des unteren vorderen Rahmens (B) sind flexibel miteinander in Kontakt, die Feder (1) ist zwischen einem Kopf (22) eines Drahtes (2) und einer Oberfläche (BM) einer ersten Aufnahme (B2) des zweiten Teils des unteren vorderen Rahmens (B) gespannt, der Durchmesser des Kopfes (22) und der Außendurchmesser der Feder (1) sind kleiner als der Durchmesser der ersten Aufnahme (B2) und gleiten in Längsrichtung gegenüber einer Achse der Aufnahme (B2), wenn sich der erste Teil des oberen vorderen Rahmens (A) und der zweite Teil des unteren vorderen Rahmens (B) voneinander wegbewegen, **der dadurch gekennzeichnet ist, dass** der elastische Ring den Draht (2) enthält, ein erstes Segment (24) des Drahtes (2) durchläuft die Feder (1), die erste Aufnahme (B2), eine zweite Aufnahme (B1) des zweiten Teils des unteren vorderen Rahmens (B) ist für den Betrieb mit der ersten Aufnahme (B2) verbunden und hat einen kleineren Durchmesser als die erste Aufnahme (B2) und eine Aufnahme (A1) des ersten Teils des oberen vorderen Rahmens (A), während ein zweites Segment (25) des Drahtes (2) mit einer Oberfläche (A5) des ersten Teils des oberen vorderen Rahmens (A) in Kontakt ist, der parallel zu einer Achse der Einkerbung (5) ist und die Aufgabe hat, die Länge des ersten Segments (24) zu definieren, das erste Segment (24) dient auch als Scharnier für die Stange, ein Abschnitt (26) des Drahtes (2) ist so konfiguriert, dass er eine Stange oder ein Stangenkern ist, die Einkerbung (5) wurde zwischen der Aufnahme (A1) und der zweiten Aufnahme (B1) realisiert.

2. Elastischer Schließblock gemäß Patentanspruch 1, **der dadurch gekennzeichnet ist, dass** er eine Bohrung (4) hat, die sich in der Ebene der Einkerbung (5) befindet, die senkrecht zur Ebene des vorderen Rahmens ist, die Bohrung (4) hat die Funktion, einen Kegelkörper (CC) aufzunehmen, um eine elastische Öffnung des Rings der Brille zu ermöglichen, die Abmessung des Außendurchmessers des Kegelkörpers (CC) entspricht einem Lauf der Feder (1).

3. Elastischer Schließblock gemäß Patentanspruch 1 oder 2, **der dadurch gekennzeichnet ist, dass** der Kopf (22) eine Schraubenmutter (110) ist, die genannte Schraubenmutter (100) ermöglicht die Spannung der Feder (1), um fähig zu sein, den Draht (2) zunächst zu biegen und dann am Schließblock zu montieren.

## Revendications

1. Serre-cercle élastique sans vis pour lunettes opérationnel comme charnière et tige comprenant : un ressort en spirale plate (1), une première partie de cadre avant supérieur (A), une seconde partie de cadre avant inférieur (B) et une fente (5) qui sépare dans le sens longitudinal la première partie de cadre avant supérieur (A) de la seconde partie de cadre avant inférieur (B) ; la première partie de cadre avant supérieur (A) et la seconde partie de cadre avant inférieur (B) sont en contact flexible ; le ressort (1) est tendu entre une tête (22) d'un fil (2) et une surface (BM) d'un premier siège (B2) de la seconde partie de cadre avant inférieur (B) ; le diamètre de la tête (22) et le diamètre externe du ressort (1) sont inférieurs au diamètre du premier siège (B2) et ils glissent dans le sens longitudinal par rapport à un axe du siège (B2), quand la première partie de cadre avant supérieur (A) et la seconde partie de cadre avant inférieur (B) s'éloignent l'une de l'autre, **caractérisé en ce que** le cercle élastique comprend le fil (2), un premier segment (24) du fil (2) qui passe à travers le ressort (1), le premier siège (B2), un second siège (B1) de la seconde partie de cadre avant inférieur (B) reliée opérationnellement au premier siège (B2) et ayant un diamètre inférieur au premier siège (B2), et un siège (A1) de la première partie de cadre avant supérieur (A), tandis qu'un second segment (25) du fil (2) est en contact avec une surface (A5) de la première partie de cadre avant supérieur (A) parallèle à un axe de la fente (5), et sert à définir la longueur du premier segment (24) ; le premier segment (24) opère aussi comme charnière pour la tige ; une section (26) du fil (2) est configurée pour former une tige ou un cœur de tige, la fente (5) est réalisée entre le siège (A1) et le second siège (B1).

2. Serre-cercle élastique, selon la revendication 1, **caractérisé en ce qu'**il a un trou (4) situé dans le plan de la fente (5) perpendiculaire au plan du cadre avant; le trou (4) accueille un corps conique (CC) pour permettre une ouverture élastique du cercle des lunettes, la dimension du diamètre externe du corps conique (CC) est égale à une course du ressort (1).

3. Serre-cercle élastique, selon la revendication 1 ou 2, **caractérisé en ce que** la tête (22) est un écrou (100) ; cet écrou (100) permet de tendre le ressort (1) afin de pouvoir plier préalablement le fil (2) puis l'assembler sur le serre-cercle.
